# EUROPÄISCHE PATENTSCHRIFT

(11) **EP 3 387 270 B1**
(45) Veröffentlichungstag und Bekanntmachung des Hinweises auf die Patenterteilung: **14.09.2022**
(21) Anmeldenummer: 16809062.9
(22) Anmeldetag: 09.12.2016
(51) Int. Cl.: F16B 5/04, F16B 37/06

(54) **BEFESTIGUNGSELEMENT**
FASTENING ELEMENT
ÉLÉMENT DE FIXATION

(30) Priorität: 09.12.2015 DE 102015121477; 01.06.2016 DE 102016110118
(43) Veröffentlichungstag der Anmeldung: 17.10.2018
(73) Patentinhaber: Bossard AG, 6301 Zug (CH)
(72) Erfinder: BEER, Florian, 89186 Illerrieden (DE); WOLF, Tobias, 89186 Illerrieden (DE)
(74) Vertreter: Rey, Antje Gabriele
(86) Internationale Anmeldenummer: PCT/EP2016/080514
(87) Internationale Veröffentlichungsnummer: WO 2017/098016

(56) Entgegenhaltungen:
- DE-A1- 3 109 601
- DE-A1- 10 253 888
- US-A1- 2014 037 398

## Beschreibung

### Gebiet der Erfindung

Die vorliegende Erfindung betrifft ein Befestigungselement und eine Nietverbindung, welche mit dem Befestigungselement hergestellt ist. Ausserdem betrifft die vorliegende Erfindung ein Abstandshaltesteuerungselement und eine Verwendung desselben.

### Hintergrund

Aus dem Stand der Technik verschiedene Befestigungslösungen für Befestigungssituationen bekannt, bei denen der Zugang nur von einer Seite her möglich ist.

Eine solche Befestigungslösung stellen die sogenannten Blindnietverbindungen dar, welche sich insbesondere auch für die Verbindung von dünnwandigen Materialien eignen, bei denen es oft nicht möglich ist ein Gewinde direkt ins Material zu schneiden.

Bekannte Blindnietverbindungen enthalten eine Blindnietmutter und einen Gewindedorn, wobei beim Setzen der Blindnietverbindung der Gewindedorn in die Blindnietmutter eingeschraubt wird und die Blindnietmutter in einer vorgefertigten Bohrung eines Bauteils oder Blechs positioniert wird. Eine axiale Zugkraft, welche in eine Richtung vom Bauteil oder Blech weg auf den Gewindedorn wirkt erzeugt eine Aufweitung eines Deformationsbereichs der Blindnietmutter durch den Gewindedorn und damit eine Bildung eines Wulsts auf der blinden Seite des Bauteils. Nach dem Ausdrehen des Gewindedorns kann die gesetzte Blindnietmutter für eine Schraubverbindung verwendet werden.

Der Nachteil dieser bekannten Blindnietverbindungen ist, dass mehrere Arbeitsschritte erforderlich sind, um eine solche Blindnietverbindung zu montieren.

Aus dem Stand der Technik sind ausserdem bekannt:
Das Dokument DE 102 53 888 A1, gibt eine Befestigungseinheit an, mit einer Blindnietmutter mit einem Schaft, der ein Gewinde und einen Verformungsbereich aufweist, und einem Setzkopf, der einen grösseren Aussendurchmesser als der Schaft aufweist, und einer Schraube, die einen Gewindeschaft und einen Schraubenkopf mit einem gegenüber dem Gewindeschaft vergrösserten Aussendurchmesser aufweist, der mindestens so gross wie der Aussendurchmesser des Fortsatzes ist, wobei der Setzkopf auf seiner dem Schaft gegenüberliegenden Seite einen verformbaren Fortsatz aufweist.

Das Dokument DE 31 09 601 A1 zeigt eine Spannhülse zum Verbinden von rohrförmigen Stangenabschnitten mit rundem Querschnitt, die aus einer rechteckigen Metallplatte zusammengerollt ist und einen Längsschlitz als Ausgleich für ein elastisches Zusammendrücken aufweist und dessen Aussendurchmesser etwas grösser ist als der Innendurchmesser der miteinander zur verbindenden rohrförmgigen Stangenabschnitte und in die Enden der miteinander zu verbindenden rorförmigen Stangenabschnitte einschiebbar ist, wobei die Spannhülse an ihren den Längsschlitz begrenzenden Kanten nach aussen über den Aussendurchmesser der Spannhülse vorstehende und von hochgewölbten, scharfkantigen Ecken oder sägezahnförmigen Ecken gebildete Vorsprünge aufweist, die sich in die inneren Mantelflächen der beiden miteinander zu verbindenden rohrförmigen Stangenabschnitte eindrücken und eingraben.

### Darstellung der Erfindung

Für die vorliegende Erfindung stellt sich daher die Aufgabe, ein Befestigungselement gemäss Anspruch 1 bereitzustellen, welches die Nachteile des Stands der Technik überwindet.

Diese Aufgabe wird durch die Gegenstände der unabhängigen Patentansprüche gelöst.

Entsprechend bezieht sich ein erster Aspekt der Erfindung auf ein Befestigungselement zur Herstellung einer Blindnietverbindung gemäß Anspruch 1.

In einer bevorzugten Ausführungsform ist der Montage-Distanzbereich so ausgestaltet, dass die axiale Längenverkürzung durch eine elastische oder plastische Verformung oder durch eine Relativbewegung von Bauteilen unter Reibung bewirkt wird.

In einer weiteren bevorzugten Ausführungsform kann der Montage-Distanzbereich so ausgestaltet sein, dass die Verkürzung der axialen Länge unter einer elastischen oder plastischen radialen Erweiterung der Umfangsbegrenzungen des Montage-Distanzbereichs erfolgt.

Vorzugsweise ist die Umfangsbegrenzung des Verformungsbereichs zumindest in einem Teilbereich seiner axialen Erstreckung nicht rotationssymmetrisch.

Der Verformungsbereich kann beispielsweise einen im Wesentlichen ringförmigen Querschnitt mit einer kreisrunden oder mehreckigen, z.B. sechseckigen (mutterförmigen), Aussenkontur haben.

Alternativ dazu kann der Verformungsbereich auch eine im Wesentlichen kreisförmige Umfangsbegrenzung aufweisen, welche vorzugsweise in einem Bereich mit Rändeln versehen ist.

Durch diese Ausgestaltungen wird ein rotatorischer Form- und/oder Kraftschluss des Verformungsbereichs mit den Begrenzungen einer Öffnung, insbesondere einer Bohrung, in welche das Befestigungselement bestimmungsgemäss eingesetzt wird, möglich.

Vorzugsweise ist der Montage-Distanzbereich so ausgestaltet, dass erst beim Übersteigen einer darauf wirkenden axialen Vorspannkraft, welche durch das Einschrauben der Schraube in das Innengewinde des Antriebsbereichs erzeugt wird, eine Verkürzung der axialen Länge des Montage-Distanzbereichs auftritt, welche Verkürzung vorzugsweise durch plastische oder elastische Deformation stattfindet.

Gemäss Anspruch 1, enthält der Montage-Distanzbereich einen ersten Widerlagerring, der auf seiner einen Seite mit einer umlaufenden konusförmigen ersten Fase versehen ist und einen zweiten Widerlagerring, welcher auf seiner einen, der ersten Fase des ersten Widerlagerrings zugewandten Seite mit einer an diese erste Faser angepassten umlaufenden konusförmigen zweiten Fase versehen ist. Einer der beiden Ringe ist mit einer umfangsmässigen Unterbrechung versehen. Die beiden Ringe sind derart ausgebildet, dass zum Verkürzen der axialen Länge des Montage-Distanzbereichs die beiden Widerlagerringe unter Verringerung beziehungsweise Erweiterung des Durchmessers des unterbrochenen Widerlagerrings ineinander eintauchen.

In einer weiteren Ausführungsform kann einer der beiden Widerlagerringe, insbesondere der nicht mit der umfangsmässigen Unterbrechung versehene Ring, stoffschlüssig mit einer Unterseite des Schraubenkopfs verbunden sein.

Vorzugsweise weist der Montage-Distanzbereich im Bereich seiner Angrenzung an den Verformungsbereich einen Flansch oder eine Schulter auf, welcher einen Aussendurchmesser hat der grösser ist als die Umfangsbegrenzungen des Verformungsbereichs.

In einer Ausführungsform des Befestigungselements ist die Nietenanordnung einstückig ausgebildet.

In einer bevorzugten Ausführungsform des Befestigungsteils sind der Verformungsbereich und/oder der Antriebsbereich und/oder der Montage-Distanzbereich gemeinsam von einem einstückigen Bauteil gebildet.

Vorzugsweise sind der Verformungsbereich und der Montage-Distanzbereich von einem gemeinsamen Bauteil gebildet.

Besonders bevorzugt sind der Verformungsbereich und der Antriebsbereich von einem gemeinsamen Bauteil gebildet.

In einer weiteren bevorzugten Ausführungsform sind der Verformungsbereich, der Antriebsbereich und der Flansch oder die Schulter des Montage-Distanzbereichs einstückig ausgebildet.

Ein zweiter Aspekt der Erfindung bezieht sich auf eine Nietenverbindung, welche zwischen mindestens zwei Bauteilen, insbesondere zwischen zwei Platten mit einem Befestigungselement nach einem der vorhergehenden Ansprüche hergestellt wird.

Ein weiterer Aspekt der Erfindung bezieht sich auf ein Abstandshaltesteuerungselement gemäss Anspruch 9.

Das Abstandshaltesteuerungselement kann als Bauteilsatz mit zwei losen Widerlagerringen vielfältig Einsatz finden. Es kann aber auch und vorzugsweise der erste Widerlagerring mit seiner von dessen erster Seite abgewandten Seite auf der Unterseite des Schraubkopfes einer Setzschraube für ein Blindnietelement vorzugsweise stoffschlüssig und damit unverlierbar festgelegt sein.

In jedem Falle wird durch das Zusammenwirken der beiden Fasen und der ungleich großen Durchmesser der beiden Widerlagerringe bei Überschreiten der bestimmten Kraft zwischen den Wirkflächen das Eintauchen der beiden Widerlagerringe ineinander unter Verringerung des Durchmessers des gesprengten zweiten Widerlagerrings und damit unter Verkleinerung von deren Abstand bewirkt.

Mit Vorteil ist das Abstandshaltesteuerungselement der vorgenannten Art für die Verwendung bei einem Blindnietelement, insbesondere bei einer Blindnietmutter, vorgesehen.

Vorteilhafte Ausgestaltungen und zweckmässige Weiterbildungen des Abstandshaltesteuerungselements sind in den jeweiligen Unteransprüchen 10-15 gekennzeichnet. Ein weiterer Aspekt der Erfindung bezieht sich auf eine Verwendung eines Abstandshaltesteuerungselements gemäß Anspruch 16.

Vorteilhafte Merkmale dieser Verwendung sind in den jeweiligen Unteransprüchen 17-18 gekennzeichnet.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1a) eine Schnittansicht einer dritten Ausführungsform eines zweiten erfindungsgemässen Befestigungselements und Fig. 1ai) einen Schnitt entlang der Schnittlinie A;
Fig. 1b) die Ausführungsform des Befestigungselements aus Fig. 1a) nach dem teilweisen Anziehen der Schraube und 1bi) einen Schnitt entlang der Schnittlinie B;
Fig. 1c) die Ausführungsform des Befestigungselements aus Fig. 1a) nach dem vollständigen Anziehen der Schraube und 1ci) einen Schnitt entlang der Schnittlinie C;
Fig. 2a in Aufsicht ein Ausführungsbeispiel für das Abstandshaltesteuerungselement gemäß der vorliegenden Erfindung;
Fig. 2b in Schnittansicht ein Ausführungsbeispiel für die Anordnung des Abstandshaltesteuerungselements aus Fig. 2a in Bezug auf ein Blindnietelement, bevor eine bestimmte Kraft überschritten wird; und
Fig. 2c in Schnittansicht ein Ausführungsbeispiel für die Anordnung des Abstandshaltesteuerungselements aus Fig. 2a in Bezug auf ein Blindnietelement, nachdem eine bestimmte Kraft überschritten wurde;

### Weg(e) zur Ausführung der Erfindung

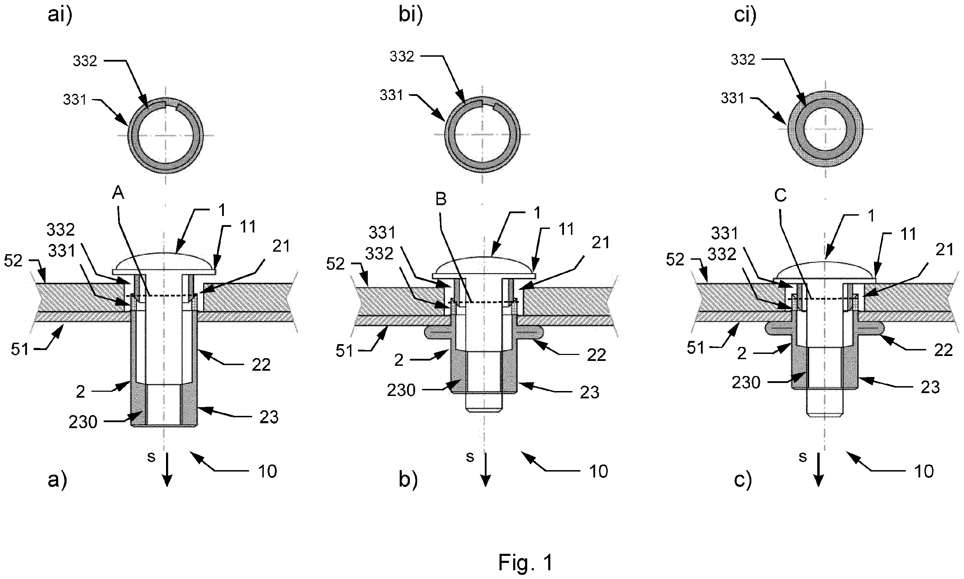

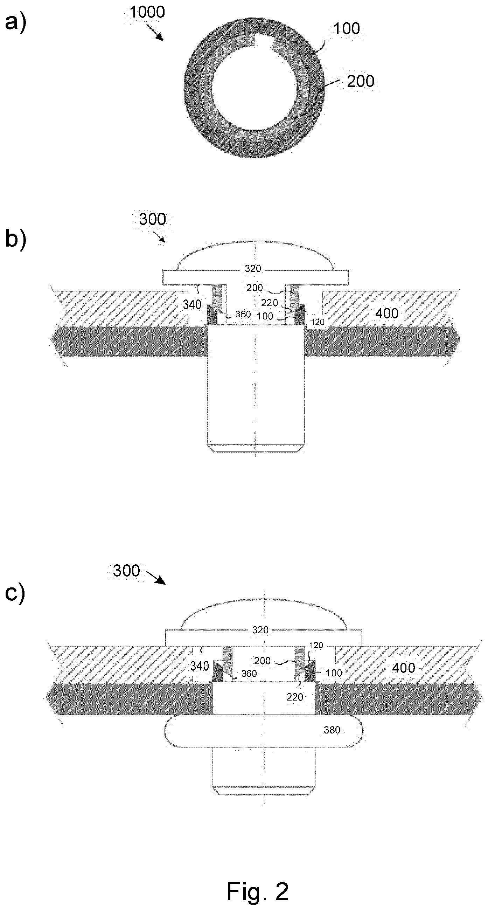

Alle in den Figuren 1 und 2 gezeigten Ausführungsformen des erfindungsgemässen Befestigungselements 10 sind in ihrer bestimmungsgemässen Anordnung mit dem Verformungsbereich 22 in einer Bohrung eines ersten plattenförmigen Bauteils 51 angeordnet und weisen folgende Merkmale auf:
Das Befestigungselement 10 umfasst eine Schraube 1 mit einem radial über den Schraubenschaft überstehenden Schraubkopf 11 und einer hülsenförmigen Nietenanordnung 2, welche von der Schraube 1 durchsetzt ist. Die Nietenanordnung 2 weist ausgehend vom Schraubenkopf 11 nacheinander angeordnet einen Montage-Distanzbereich 21, einen Verformungsbereich 22 und einen Antriebsbereich 23 mit einem Innengewinde 230, in welchen die Schraube 1 eingeschraubt ist, auf. Der Verformungsbereich 22 hat einen im Wesentlichen ringförmigen Querschnitt mit einer kreisrunden oder mehreckigen, z.B. sechseckigen (mutterförmigen), Aussenkontur.

In axialer Richtung vom Antriebsbereich 23 zum Schraubenkopf 11 gesehen liegen die Umfangsbegrenzungen des Antriebsbereichs 23 innerhalb der Umfangsbegrenzungen des Verformungsbereichs 22 und damit auch innerhalb des Querschnitts der Bohrung des ersten plattenförmigen Bauteils 51.

Die Umfangsbegrenzungen des Montage-Distanzbereichs 21 stehen radial über die Umfangsbegrenzungen des Verformungsbereichs 22 über. Ausserdem stehen die Umfangsbegrenzungen des Montage-Distanzbereichs 21 auch radial über die Bohrung des ersten plattenförmigen Bauteils 51 über, um zu verhindern, dass der Montage-Distanzbereich 21 in die besagte Bohrung eintritt. In den in Figuren 1 bis 3 gezeigten Ausführungsformen bildet dazu der Montage-Distanzbereich 21 im Bereich seiner Angrenzung an den Verformungsbereich 22 eine Schulter 221, wie in der Detailzeichnung X von Fig. 1ai) abgebildet.

Die Umfangsbegrenzungen des Schraubenkopfs 11 stehen wiederum radial über die Umfangsbegrenzungen des Montage-Distanzbereichs 21 und über die Umfangsbegrenzungen des Verformungsbereichs 22 über.

Die Umfangsbegrenzungen des Schraubenkopfs 11 stehen in den in Fig. 1und 2 gezeigten Ausführungsbeispielen auch über eine Bohrung in einem zweiten Bauteil 52 über, welches mit dem ersten Bauteil 51 mittels des Befestigungselements 10 kraftschlüssig verbunden werden soll. Die Bohrungen des ersten Bauteils 51 und des zweiten Bauteils 52 sind dazu koaxial angeordnet.

Wenn kein anderes Bezugssystem erwähnt ist, bezieht sich eine axiale Ausrichtung in der Beschreibung der Figuren auf die axiale Richtung vom Antriebsbereich 23 zum Schraubenkopf 11 gesehen, bzw. auf die Längsachse der Schraube 1.

Fig. 1a) zeigt eine dritte bevorzugte Ausführungsform des Befestigungselements 10. Der Montage-Distanzbereich 21 ist mit einem ersten Widerlagerring 331, der auf seiner einen Seite mit einer umlaufenden konusförmigen ersten Fase versehen ist und einem zweiten Widerlagerring 332, welcher auf seiner einen, der ersten Fase zugewandten Seite mit einer an diese erste Faser angepassten umlaufenden konusförmigen zweiten Fase versehen ist, ausgestaltet. Der zweite Widerlagerring 332, welcher einen kleineren Durchmesser hat als der erste Widerlagerring 332 ist mit einer umfangsmässigen Unterbrechung versehen, ist also ein sogenannter gesprengter Widerlagerring. Zur Veranschaulichung der beiden Widerlagerringe 331, 332 zeigt die Fig. ai) die beiden Widerlagerringe 331, 332 in einem Schnitt entlang der Schnittlinie A in Fig. 1a).

Die beiden Widerlagerringe 331, 332 sind derart ausgebildet, dass sie zum Verkürzen der axialen Länge des Montage-Distanzbereichs 21 unter Verringerung des Durchmessers des unterbrochenen zweiten Widerlagerringes 332 ineinander eintauchen.

Fig. 1b) zeigt das erfindungsgemässe Befestigungselement der zweiten Ausführungsform, nachdem die Schraube 1 in Einschraubrichtung rotiert wurde. Wie bei der ersten und der zweiten Ausführungsform erfährt der Verformungsbereich 21 eine plastische Deformation, wodurch sich die axiale Länge desselben verkürzt und sich auf der Rückseite des ersten Bauteils 51 ein Wulst bildet.

Fig. 1bi) zeigt die Anordnung der Widerlagerringe 331, 332 in einem Schnitt entlang der Schnittlinie B des Befestigungselements. Die beiden Ringe 331, 332 sind immer noch in der ursprünglichen Anordnung zueinander ausgerichtet. Die beiden Widerlagerringe 331, 332 sind so ausgestaltet, dass die zum Zusammenschieben der Ringe 331, 332 erforderliche Axialkraft grösser ist als die zur Verformung des Verformungsbereichs 22 erforderliche Axialkraft.

Wie in der ersten und der zweiten Ausführungsform ist der Montage-Distanzbereich 21 derart ausgestaltet, dass beim weiteren Anziehen der Schraube 1 durch Rotation derselben in Einschraubrichtung im Innengewinde 230 des Antriebsbereichs 23 auf die Verformung des Verformungsbereichs 22 und dessen Verkürzung eine Verkürzung der axialen Länge des Montage-Distanzbereichs 21 folgt.

Dies indem beim weiteren Einschrauben der Schraube 1 in das Innengewinde 230 die Kräfte, welche auf die beiden Widerlagerringe 51, 52 wirken gross genug werden, dass sie die Reibkräfte zwischen den Ringen 51, 52 und die Vorspannkraft des zweiten unterbrochenen Rings 52 übersteigen, so dass der zweite Widerlagerring 52 zusammengedrückt wird, sich sein Durchmesser verkleinert und er in den ersten Widerlagerring 51 eintaucht, wie in Fig. 3c) dargestellt.

Fig. 1ci) zeigt die Widerlagerringe 331, 332, in einem Querschnitt C von Fig. 1c), wobei der Radius des unterbrochenen zweiten Widerlagerrings 332 so verkleinert ist, dass er in den ersten Widerlagerring hineintaucht.

Die auf die Widerlagerringe 331, 332 wirkende axiale Last wird durch das Anziehen der Schraube 1 erzeugt. Unter dieser axialen Last wird der unterbrochene zweite Widerlagerring 332 in den ersten Widerlagerring 331 geschoben, wodurch sich die axiale Länge des Montage-Distanzbereichs 21 verkleinert. Gleichzeitig mit der Verkürzung der axialen Länge des Montage-Distanzbereichs 21 verringert sich auch ein Abstand zwischen der Unterseite des Schraubenkopfs 11 und einer gegen den Schraubenkopf 11 ausgerichteten Oberseite des zweiten Bauteils 52.

Das anhand Fig. 2 veranschaulichte Abstandshaltesteuerungselement 1000 dient zum Halten eines vorgebbaren Abstands (vgl. Fig. 2b) zwischen seinen beiden Wirkseiten unterhalb einer auf diese einwirkenden bestimmten Kraft, wobei dieser Abstand bei Übersteigen der bestimmten Kraft verkleinert wird (vgl. Fig. 2c).

Hierzu weist das Abstandshaltesteuerungselement 1000 einen ersten Widerlagerring 100, der auf seiner einen Seite mit einer umlaufenden konusförmigen ersten Fase 120 versehen ist, und einen gesprengten zweiten Widerlagerring 200, der auf seiner einen, der ersten Fase 120 zugewandten Seite mit einer an diese erste Fase 120 angepassten umlaufenden konusförmigen zweiten Fase 220 versehen ist.

Der Durchmesser des zweiten Widerlagerrings 200 ist kleiner als der Durchmesser des ersten Widerlagerrings 100.

Wie der exemplarischen Darstellung gemäß Fig. 2b entnehmbar ist, wird der zweite Widerlagerring 200 mit seiner von seiner ersten Fase 120 abgewandten Seite an der kreisringförmigen Unterseite 320 eines Kopfs 340 eines Blindnietelements 300, insbesondere einer Blindnietmutter, stoffschlüssig festgelegt. An den Kopf 340 schließt sich ein hohler Schaft 360 an, dessen Außenseite einen gegenüber dem Kopf 340 geringeren Außendurchmesser aufweist. Im hohlen Schaft 360 ist mit axialem Abstand vom Kopf 320 ein Innengewinde vorgesehen.

Indem die beiden konusförmigen Fasen 120 und 220 aneinander anliegen und unterschiedliche Durchmesser aufweisen, tauchen die beiden Widerlagerringe 100 und 200 bei Überschreiten der bestimmten Kraft unter Verringerung des Durchmessers des gesprengten zweiten Widerlagerrings 200 und damit unter Verringerung des Abstands ineinander ein, so dass der Abstand steuerbar ist.

Es sind also im Prinzip zwei zueinander konzentrische, sich an jeweils einem Konus berührende Ringe 100 und 200 zwischen dem Kopf der Schraube und dem Einsatzkopf vorgesehen. Der eine Widerlagerring 100 ist geschlossen, der andere Widerlagerring 200 ist gesprengt und damit offen.

Werden die beiden Widerlagerringe 100 und 200 zusammengepresst, so gleitet der gesprengte Ring 200 am ersten Ring 100 entlang und verkürzt deren gemeinsame Höhe; allerdings geschieht diese Verkürzung erst, nachdem der Wulst 400 vollständig gebildet ist (vgl. Fig. 2c).

Der geschlossene Ring 100 kann als Teil des Blindnietelements 300 ausgebildet sein, das heißt die Funktion bzw. das Design des geschlossenen Rings 100 kann im Blindnietelement 300 integriert sein; der gesprengte Ring 200 kann frei um die Schraube angeordnet sein. In einer derartigen Anordnung wird die feste Relativlage von Schraube zum Einsatzkopf indirekt gebildet.

Auch die lose Anordnung beider Widerlagerringe 100, 200 ist möglich, das heißt das Abstandshaltesteuerungselement 1000 kann als separates bzw. eigenständiges Teil ausgebildet sein.

Unabhängig von der Anformung bzw. eigenständigen Ausgestaltung der beiden Widerlagerringe 100, 200 gleitet ab der bestimmten Kraft der gesprengte Ring 200 mit seiner Fase 220 über die Fase 120 am geschlossenen Ring 100 ab, so dass sich die Schraube auf das obere Bauteil senken kann.

In jedem Falle sind die Ringe 100, 200 nach dem Einsatz wieder verwendbar, wenn eine gewisse Elastizität des gesprengten Rings 200 gegeben ist, denn hierbei findet eine irreversible Verbiegung des gesprengten Rings 200 nicht statt; auch erfolgt kein Abscheren oder Brechen, sondern lediglich ein Biegen ohne Zerstörung.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Befestigungselement zur Herstellung einer Blindnietverbindung zwischen insbesondere plattenförmigen Bauteilen, umfassend
- eine Schraube (1) mit einem radial über den Schraubenschaft überstehenden Schraubenkopf (11) und
- eine hülsenförmige Nietenanordnung (2), welche von der Schraube (1) durchsetzt ist und ausgehend von dem Schraubenkopf (11) nacheinander aufweist
- a) einen Montage-Distanzbereich (21),
- b) einen Verformungsbereich (22) und
- c) einen Antriebsbereich (23) mit einem Innengewinde (230), in welchen die Schraube (1) eingeschraubt ist,
- wobei in axialer Richtung vom Antriebsbereich (23) zum Schraubenkopf (11) gesehen
- die Umfangsbegrenzungen des Antriebsbereichs (23) innerhalb der Umfangsbegrenzungen des Verformungsbereichs (22) liegen,
- die Umfangsbegrenzungen des Montage-Distanzbereichs (21) radial über die Umfangsbegrenzungen des Verformungsbereichs (22) überstehen und
- die Umfangsbegrenzungen des Schraubenkopfes (11) radial über die Umfangsbegrenzungen des Montage-Distanzbereichs (21) und die Umfangsbegrenzungen des Verformungsbereichs (22) überstehen,
und wobei der Montage-Distanzbereich (21) und der Verformungsbereich (22) derartig ausgebildet sind, dass es bei einem Anziehen der Schraube (1) durch Rotation derselben in Einschraubrichtung im Innengewinde (230) des Antriebsbereichs (23)
zuerst zu einer plastischen Verformung des Verformungsbereichs (22) kommt derart, dass sich dessen axiale Länge verkürzt und sich dessen Umfangsbegrenzungen radial vergrössern,
und es sodann zu einer Verkürzung der axialen Länge des Montage-Distanzbereichs (21) kommt,
wobei der Montage-Distanzbereich (21) einen ersten Widerlagerring (331), der auf seiner einen Seite mit einer umlaufenden konusförmigen ersten Fase versehen ist und einen zweiten Widerlagerring (332), welcher auf seiner einen, der ersten Fase zugewandten Seite mit einer an diese erste Fase angepassten umlaufenden konusförmigen zweiten Fase versehen ist, umfasst, wobei einer der beiden Ringe (331, 332) mit einer umfangsmässigen Unterbrechung versehen ist, wobei die beiden Ringe (331, 332) derart ausgebildet sind, dass zum Verkürzen der axialen Länge des Montage-Distanzbereichs (21) die beiden Widerlagerringe (331, 332) unter Verringerung beziehungsweise Erweiterung des Durchmessers des unterbrochenen Widerlagerrings ineinander eintauchen.

2. Befestigungselement nach Anspruch 1, wobei der Montage-Distanzbereich (21) so ausgestaltet ist, dass die axiale Längenverkürzung durch eine elastische oder plastische Verformung oder durch eine Relativbewegung von Bauteilen unter Reibung bewirkt wird.

3. Befestigungselement nach einem der vorhergehenden Ansprüche, wobei die Umfangsbegrenzung des Verformungsbereichs (22) zumindest in einem Teilbereich seiner axialen Erstreckung nicht rotationssymmetrisch ist.

4. Befestigungselement nach einem der vorhergehenden Ansprüche, wobei der Montage-Distanzbereich (21) so ausgestaltet ist, dass die Verkürzung der axialen Länge unter einer elastischen oder plastischen radialen Erweiterung des Montage-Distanzbereichs (21) erfolgt.

5. Befestigungselement nach einem der vorhergehenden Ansprüche, wobei einer der beiden Widerlagerringe (331, 332), insbesondere der nicht mit der umfangsmässigen Unterbrechung versehene Ring (331, 332), stoffschlüssig mit einer Unterseite des Schraubkopfs (11) verbunden ist.

6. Befestigungselement nach einem der vorhergehenden Ansprüche, wobei der Montage-Distanzbereich (21) im Bereich seiner Angrenzung an den Verformungsbereich (22) einen Flansch oder eine Schulter (221) aufweist, mit einem Aussendurchmesser welcher grösser ist als der Aussendurchmesser des Verformungsbereichs (21).

7. Befestigungselement nach einem der vorhergehenden Ansprüche, wobei der Verformungsbereich (22) und/oder der Antriebsbereich (23) und/oder der Montage-Distanzbereich (21) gemeinsam von einem einstückigen Bauteil gebildet sind.

8. Nietverbindung zwischen mindestens zwei Bauteilen (51, 52), hergestellt mit einem Befestigungselement nach einem der vorhergehenden Ansprüche.

9. Abstandshaltesteuerungselement (1000) für das Befestigungselement gemäss einem der vorhergehenden Ansprüche 1 bis 7 zum Halten eines vorgebbaren Abstands zwischen seinen beiden Wirkseiten unterhalb einer auf diese einwirkenden bestimmten Kraft, welcher Abstand bei Übersteigen der bestimmten Kraft verkleinert wird,
**gekennzeichnet**
- **durch** einen ersten Widerlagerring (100), der auf seiner einen Seite mit einer umlaufenden konusförmigen ersten Fase (120) versehen ist, und
- **durch** einen gesprengten zweiten Widerlagerring (200), der auf seiner einen, der ersten Fase (120) zugewandten Seite mit einer an diese erste Fase (120) angepassten umlaufenden konusförmigen zweiten Fase (220) versehen ist,
- **dadurch**, dass die beiden Widerlagerringe (100, 200) bei Überschreiten der bestimmten Kraft unter Verringerung beziehungsweise Erweiterung des Durchmessers des zweiten Widerlagerrings (200) ineinander eintauchen.

10. Abstandshaltesteuerungselement (1000) gemäß Anspruch 9, **dadurch gekennzeichnet, dass** der zweite Widerlagerring (200) mit seiner von der ersten Fase (120) abgewandten Seite auf der Unterseite eines Kopfs (340) eines Blindnietelements (300) festlegbar ist.

11. Abstandshaltesteuerungselement (1000) gemäß Anspruch 10, **dadurch gekennzeichnet, dass** die Festlegung stoffschlüssig sein kann.

12. Abstandshaltesteuerungselement (1000) gemäß Anspruch 10 oder 11, **dadurch gekennzeichnet, dass** das Blindnietelement (300) als Blindnietmutter ausgebildet ist.

13. Abstandshaltesteuerungselement (1000) gemäß mindestens einem der Ansprüche 9 bis 12, **dadurch gekennzeichnet, dass** der Durchmesser des ersten Widerlagerrings (100) ungleich dem Durchmesser des zweiten Widerlagerrings (200) ist.

14. Abstandshaltesteuerungselement (1000) gemäß Anspruch 13, **dadurch gekennzeichnet, dass** der Durchmesser des ersten Widerlagerrings (100) größer als der Durchmesser des zweiten Widerlagerrings (200) ist.

15. Abstandshaltesteuerelement (1000) gemäss einem der vorhergehenden Ansprüche14 bis 15, wobei der geschlossene Ring (100) als Teil des Blindnietelements 300 ausgebildet ist.

16. Verwendung eines Abstandshaltesteuerungselements (1000) gemäß mindestens einem der Ansprüche 9 bis 15 bei einem Blindnietelement (300) mit einem Kopf (340), mit einem sich daran anschließenden hohlen Schaft (360), dessen Außenseite einen gegenüber dem Kopf (340) geringeren Außendurchmesser aufweist, und mit einem im hohlen Schaft (360) mit axialem Abstand vom Kopf (340) vorgesehenen Innengewinde.

17. Verwendung gemäß Anspruch 16, **dadurch gekennzeichnet,**
- **dass** der erste Widerlagerring (100) als Teil des Blindnietelements (300) ausgebildet ist und/oder im Blindnietelement (300) integriert ist und
- **dass** der zweite Widerlagerring (200) frei und/oder lose um den hohlen Schaft (360) angeordnet ist.

18. Verwendung gemäß Anspruch 17, **dadurch gekennzeichnet, dass** der erste Widerlagerring (100) und der zweite Widerlagerring (200) frei und/oder lose um den hohlen Schaft (360) angeordnet sind.

## Claims

1. Fastening element for producing a blind rivet connection between, in particular, plate-shaped components, comprising
- a screw (1) with a screw head (11) projecting radially beyond the screw shank and
- a sleeve-shaped rivet arrangement (2) through which the screw (1) passes and which, starting from the screw head (11), successively comprises
- a) a mounting distance region (21),
- b) a deformation region (22) and
- c) a drive region (23) with an internal thread (230), into which the screw (1) is screwed,
- wherein, viewed in the axial direction from the drive region (23) to the screw head (11)
- the circumferential limits of the drive region (23) lie within the circumferential limits of the deformation region (22),
- the circumferential limits of the mounting distance region (21) project radially beyond the circumferential limits of the deformation region (22), and
- the circumferential limits of the screw head (11) project radially beyond the circumferential limits of the mounting distance region (21) and the circumferential limits of the deformation region (22),
and wherein the mounting distance region (21) and the deformation region (22) are formed in such a way that, when the screw (1) is tightened by rotation of the same in the screw-in direction in the internal thread (230) of the drive region (23)
first there is a plastic deformation of the deformation region (22) in such a way that its axial length is shortened and its circumferential limits are radially enlarged,
and then there is a shortening of the axial length of the mounting distance region (21),
wherein the mounting distance region (21) comprises a first abutment ring (331), which is provided on its one side with a circumferential conical first chamfer, and a second abutment ring (332), which is provided on its one side facing the first chamfer with a circumferential conical second chamfer adapted to this first chamfer, wherein one of the two rings (331, 332) is provided with a circumferential interruption, wherein the two rings (331, 332) are designed in such a way that, in order to shorten the axial length of the mounting distance region (21), the two abutment rings (331, 332) dip into one another while reducing or enlarging the diameter of the interrupted abutment ring.

2. Fastening element according to claim 1, wherein the mounting distance region (21) is designed in such a way that the axial length reduction is effected by an elastic or plastic deformation or by a relative movement of components under friction.

3. Fastening element according to one of the preceding claims, wherein the circumferential boundary of the deformation region (22) is not rotationally symmetrical at least in a partial region of its axial extent.

4. Fastening element according to one of the preceding claims, wherein the mounting distance region (21) is configured in such a way that the shortening of the axial length takes place under elastic or plastic radial expansion of the mounting distance region (21).

5. Fastening element according to one of the preceding claims, wherein one of the two abutment rings (331, 332), particularly the ring without the circumferential interruption (331, 332), is connected with the underside of the screw head (11) in a firmly bonded way.

6. Fastening element according to one of the preceding claims, wherein the mounting distance region (21) in the region of its adjacency to the deformation region (22) has a flange or a shoulder (221) with an outer diameter which is larger than the outer diameter of the deformation region (21).

7. Fastening element according to one of the preceding claims, wherein the deformation region (22) and/or the drive region (23) and/or the mounting distance region (21) are jointly formed by a one-piece component.

8. Riveted connection between at least two components (51, 52), produced with a fastening element according to one of the preceding claims.

9. Distance maintaining control element (1000) for the fastening element according to one of the preceding claims 1 to 7 for maintaining a predeterminable distance between its two effective sides below a certain force acting thereon, which distance is reduced when the certain force is exceeded,
**characterized**
- **by** a first abutment ring (100) which is provided on one side thereof with a circumferential conical first chamfer (120), and
- by a split second abutment ring (200) which is provided on its one side facing the first chamfer (120) with a circumferential conical second chamfer (220) adapted to this first chamfer (120),
in that the two abutment rings (100, 200) dip into one another when the determined force is exceeded, with a reduction in the diameter of the second abutment ring (200).

10. Distance maintaining control element (1000) according to claim 9, **characterized in that** the second abutment ring (200) is fixable with its side facing away from the first chamfer (120) on the underside of a head (340) of a blind rivet element (300) .

11. Distance maintaining control element (1000) according to claim 10, **characterized in that** the fixation can be material-locking.

12. Distance maintaining control element (1000) according to claim 10 or 11, **characterized in that** the blind rivet element (300) is formed as a blind rivet nut.

13. Distance maintaining control element (1000) according to at least one of claims 9 to 12, **characterized in that** the diameter of the first abutment ring (100) is unequal to the diameter of the second abutment ring (200).

14. Distance maintaining control element (1000) according to claim 13, **characterized in that** the diameter of the first abutment ring (100) is larger than the diameter of the second abutment ring (200) .

15. Distance maintaining control element (1000) according to one of claims 14 to 15, wherein the closed ring (100) is formed as part of the blind rivet element (300).

16. Use of a distance maintaining control element (1000) according to at least one of claims 9 to 15 in a blind rivet element (300) with a head (340), with a hollow shank (360) adjoining the latter, the outside of which has a smaller outside diameter than the head (340), and with an internal thread provided in the hollow shank (360) at an axial distance from the head (340).

17. Use according to claim 16, **characterized in**
- **that** the first abutment ring (100) is formed as part of the blind rivet element (300) and/or is integrated in the blind rivet element (300), and
- **that** the second abutment ring (200) is freely and/or loosely arranged around the hollow shaft (360) .

18. Use according to claim 17, **characterized in that** the first abutment ring (100) and the second abutment ring (200) are freely and/or loosely arranged around the hollow shaft (360).

## Revendications

1. Elément de fixation pour la réalisation d'une liaison par rivet aveugle entre des éléments de construction, en particulier en forme de plaque, comprenant
- une vis (1) avec une tête de vis (11) dépassant radialement de la tige de la vis et
- un dispositif de rivetage (2) en forme de manchon, traversé par la vis (1) et qui, en partant de la tête de vis (11), comprend successivement
- a) une région de distance de montage (21),
- b) une région de déformation (22) et
- c) une région d'entraînement (23) avec un
filetage intérieur (230), dans lequel la vis (1) est vissée,
- dans lequel, vu dans la direction axiale de la région d'entraînement (23) vers la tête de la vis (11)
- les limites circonférentielles de la région d'entraînement (23) se trouvent à l'intérieur des limites circonférentielles de la région de déformation (22),
- les limites circonférentielles de la région de distance de montage (21) font saillie radialement au-delà des limites circonférentielles de la région de déformation (22), et
- les limites circonférentielles de la tête de vis (11) font saillie radialement au-delà des limites circonférentielles de la région de distance de montage (21) et les limites circonférentielles de la région de déformation (22),
et dans lequel la région de distance de montage (21) et la région de déformation (22) sont formées de telle sorte que, lorsque la vis (1) est serrée par rotation de celle-ci dans le sens du vissage dans le filetage intérieur (230) de la région d'entraînement (23)
il se produit d'abord une déformation plastique de la région de déformation (22) de telle sorte que sa longueur axiale soit raccourcie et que ses limites circonférentielles soient radialement élargies,
et ensuite il y a un raccourcissement de la longueur axiale de la région de distance de montage (21),
dans lequel la région de distance de montage (21) comprend un premier anneau de butée (331), qui est pourvu sur un de ses côtés d'un premier chanfrein conique circonférentiel, et un second anneau de butée (332), qui est pourvu sur un de ses côtés faisant face au premier chanfrein d'un second chanfrein conique circonférentiel adapté à ce premier chanfrein, l'un des deux anneaux (331, 332) étant pourvu d'une interruption circonférentielle, les deux anneaux (331, 332) étant conçus de telle sorte que, pour raccourcir la longueur axiale de la région de distance de montage (21), les deux anneaux de butée (331, 332) s'imbriquent l'un dans l'autre en réduisant ou en augmentant le diamètre de l'anneau de butée interrompu.

2. Elément de fixation selon la revendication 1, dans lequel la région de distance de montage (21) est conçue de telle sorte que la réduction de la longueur axiale s'effectue par une déformation élastique ou plastique ou par un mouvement relatif des composants sous l'effet du frottement.

3. Elément de fixation selon l'une des revendications précédentes, dans lequel la limite circonférentielle de la région de déformation (22) n'est pas à symétrie de révolution au moins dans une région partielle de son étendue axiale.

4. Elément de fixation selon l'une des revendications précédentes, dans lequel la région de distance de montage (21) est configurée de telle sorte que le raccourcissement de la longueur axiale a lieu sous expansion radiale élastique ou plastique de la région de distance de montage (21).

5. Elément de fixation selon l'une des revendications précédentes, dans lequel l'un des deux anneaux de butée (331, 332), en particulier l'anneau sans interruption circonférentielle (331, 332), est relié à la face inférieure de la tête de vis (11) de manière solidaire.

6. Elément de fixation selon l'une des revendications précédentes, dans lequel la région de distance de montage (21) présente, dans la région de sa contiguïté avec la région de déformation (22), une bride ou un épaulement (221) dont le diamètre extérieur est supérieur au diamètre extérieur de la région de déformation (21).

7. Elément de fixation selon l'une des revendications précédentes, dans lequel la région de déformation (22) et/ou la région d'entraînement (23) et/ou la région de distance de montage (21) sont formées conjointement par un composant monobloc.

8. Liaison rivetée entre au moins deux composants (51, 52), réalisée avec un élément de fixation selon l'une des revendications précédentes.

9. Elément de commande de maintien de distance (1000) pour l'élément de fixation selon l'une des revendications précédentes 1 à 7, pour maintenir une distance prédéterminable entre ses deux côtés effectifs en dessous d'une certaine force agissant sur lui, cette distance étant réduite lorsque la certaine force est dépassée,
**caractérisé**
- **par** un premier anneau de butée (100) qui est pourvu sur un de ses côtés d'un premier chanfrein conique circonférentiel (120), et
- par un deuxième anneau de butée fendu (200) qui est pourvu sur son côté faisant face au premier chanfrein (120) d'un deuxième chanfrein conique circonférentiel (220) adapté à ce premier chanfrein (120),
en ce que les deux anneaux de butée (100, 200) s'enfoncent l'un dans l'autre lorsque la force déterminée est dépassée, avec une réduction du diamètre du deuxième anneau de butée (200).

10. Elément de commande de maintien de distance (1000) selon la revendication 9, **caractérisé en ce que** le deuxième anneau de butée (200) peut être fixé avec son côté opposé au premier chanfrein (120) sur la face inférieure d'une tête (340) d'un élément de rivet aveugle (300).

11. Elément de commande de maintien de distance (1000) selon la revendication 10, **caractérisé en ce que** la fixation peut être un blocage de matériau.

12. Elément de commande de maintien de distance (1000) selon la revendication 10 ou 11, **caractérisé en ce que** l'élément de rivet aveugle (300) est formé comme un écrou de rivet aveugle.

13. Elément de commande de maintien de distance (1000) selon au moins l'une des revendications 9 à 12, **caractérisé en ce que** le diamètre du premier anneau de butée (100) est différent du diamètre du deuxième anneau de butée (200).

14. Élément de commande de maintien de distance (1000) selon la revendication 13, **caractérisé en ce que** le diamètre du premier anneau de butée (100) est supérieur au diamètre du deuxième anneau de butée (200).

15. Élément de commande de maintien de distance (1000) selon l'une des revendications 14 à 15, dans lequel l'anneau fermé (100) est formé comme une partie de l'élément de rivet aveugle (300).

16. Utilisation d'un élément de commande de maintien de distance (1000) selon au moins l'une des revendications 9 à 15 dans un élément de rivet aveugle (300) avec une tête (340), avec une tige creuse (360) se raccordant à ce dernier, dont l'extérieur présente un diamètre extérieur inférieur à celui de la tête (340), et avec un filetage intérieur prévu dans la tige creuse (360) à une distance axiale de la tête (340).

17. Utilisation selon la revendication 16, **caractérisée en ce**
- **que** le premier anneau de butée (100) est formé en tant que partie de l'élément de rivet aveugle (300) et/ou est intégrée dans l'élément de rivet aveugle (300), et
- **que** le deuxième anneau de butée (200) est disposée librement et/ou de manière lâche autour de l'arbre creux (360).

18. Utilisation selon la revendication 17, **caractérisée en ce que** le premier anneau de butée (100) et le deuxième anneau de butée (200) sont disposés librement et/ou de manière lâche autour de l'arbre creux (360) .
